# EUROPEAN PATENT APPLICATION

(11) **EP 4 685 021 A1**
(43) Date of publication of application: **28.01.2026**
(21) Application number: 25190075.9
(22) Date of filing: 17.07.2025
(51) Int. Cl.: B60T 8/32, B60T 8/17, B60T 13/66, B60T 13/68, B60T 13/22

(54) **DEVICE AND CONTROL METHOD OF A MULTI DISC BRAKE**

(30) Priority: 23.07.2024 IT 202400017077
(71) Applicant: PRINOTH S.p.A., 39049 Vipiteno (BZ) (IT)
(72) Inventor: UNTERHOLZNER, Markus, 39049 VIPITENO (BZ) (IT); PEGORARO, Roberto, 39049 VIPITENO (BZ) (IT); PAOLETTI, Alberto, 39049 VIPITENO (BZ) (IT)
(74) Representative: Studio Torta S.p.A.

(57) **Abstract**

A control device (1) of a multi disc brake (3) has:
- a hydraulic circuit (4) having a supply branch (6) to supply a pressurized fluid to a single-acting hydraulic cylinder (2) of a multi disc brake (3), a discharge branch (7) selectively connectable to the supply branch (6) to discharge the supply branch (6), a pump (8) to supply pressurized fluid to the supply branch (6), a distribution valve (9) to selectively connect the supply branch (6) to the pump (8) and discharge the supply branch (6), and a check valve (11) arranged along the supply branch (6) downstream of the distribution valve (9) to maintain a given pressure in the hydraulic cylinder (2); and
- a control unit (5) configured to control the pump (8) and the distribution valve (9).

## Description

### CROSS-REFERENCE TO RELATED APPLICATIONS

This patent application claims priority from Italian patent application no. 102024000017077 filed on July 23, 2024, the entire disclosure of which is incorporated herein by reference.

### FIELD OF THE ART

The present invention relates to a device and a control method of a multi disc brake. This type of brake is used in heavy tracked vehicles, such as groomer vehicles, and has the peculiarity of selectively locking and releasing a driving wheel of the vehicle.

### BACKGROUND OF THE INVENTION

Multi disc brakes are widely used in the snow-groomer vehicle industry to selectively lock and release the driving wheels from respective static elements integral to the chassis of a vehicle.

A multi disc brake comprises a pack of annular discs, which are pivotally constrained around a shaft and freely sliding axially along the shaft and facing a support block that pivotally supports the shaft. The multi disc brake comprises a piston selectively sliding axially with respect to the shaft to selectively compress the discs against the support block to prevent shaft rotation.

The multi disc brake comprises springs to compress the piston against the discs and a hydraulic cylinder to overcome the force of the springs and move the piston away from the discs and to allow the shaft to rotate relative to the support block.

The configuration described above is dictated by safety requirements, in fact, in the absence of pressurized fluid in the hydraulic cylinder, the springs are able to lock the driving wheels.

Conversely, when the vehicle is in use, it is necessary to maintain a high pressure inside the cylinder to overcome the force of the springs. In known solutions, the high pressure is ensured by the continuous supply of pressurized fluid.

This solution has proven to be particularly effective but is not entirely satisfactory from an energy efficiency point of view. This drawback is particularly felt when the energy source is provided by electric energy accumulators since the energy expenditure affects the vehicle's range.

### OBJECT OF THE INVENTION

Aim of the present invention is to realize a control device of a multi disc brake capable of mitigating the drawbacks of the known art.

In accordance with the present invention, a control device for a multi disc brake is realized, the control device comprising a hydraulic circuit comprising:
- a supply branch to supply a pressurized fluid and at least one single-acting hydraulic cylinder of a multi disc brake;
- at least one discharge branch selectively connectable to the supply branch to discharge the supply branch;
- a pump to supply pressurized fluid to the supply branch;
- a distribution valve to selectively connect the supply branch to the pump; and
- a check valve arranged along the supply branch downstream of the distribution valve to maintain a determined pressure in the hydraulic cylinder;
- the control device comprising a control unit to control the pump and the distribution valve.

In this way, once the pressure in the section of the supply circuit between the check valve and the hydraulic cylinder has reached a given value, it is not necessary to supply further pressurized fluid with significant energy savings. In addition, it is relatively simple to achieve high pressure values with positive displacement pumps in view of the fact that in a multi disc brake the stroke of the hydraulic cylinder is very small so very little fluid mass is required.

In particular, the distribution valve is a solenoid valve, which in the rest position connects the supply branch to the discharge branch and isolates the pump from the supply branch, and in the operating position connects the pump to the supply branch and interrupts the connection between the supply branch and the discharge branch.

In this way, in the absence of energization of the distribution valve, the supply branch is connected to the discharge branch for the benefit of the safety of the vehicle. In addition, the pump can continue to operate to serve other consumers such as a front disc, a cutter, a winch and the suspensions of the groomer vehicle.

In accordance with an alternative embodiment, the distribution valve is a solenoid valve, which in the rest position connects the pump to the supply branch, and in the operating position connects the pump to a further supply branch configured to operate a further consumer and interrupts the connection between the pump and the supply branch.

In this form of implementation, the pump is dedicated to the control of the brake and to a further consumer. In this specific case, the pump is operated only in the event that there is a specific request for pressure to release the brake or to serve the further consumer. In accordance with the present invention, the hydraulic circuit comprises a pressure sensor arranged along the supply branch directly upstream of the at least one hydraulic cylinder to acquire a first signal correlated with fluid pressure in the section of the supply branch in direct communication with the at least one hydraulic cylinder so as to enable verification that a threshold value necessary to release the multi disc brake has been reached.

In particular, the control unit is configured to control actuation of the pump and the distribution valve according to said first signal and of a second signal correlated with instructions provided to the control unit. The second signal depends on the instructions which are basically "brake locked" and "brake released".

The circuit comprises a compensation tank arranged along the section of the supply branch between the check valve and the at least one hydraulic cylinder to stabilise the pressure along said section of the supply branch and, in particular, to absorb any rapid drops in pressure. The tank can also overcome the actuation of the pump to the extent that the pressure value detected by the sensor in the section of the supply branch connected directly to the at least one hydraulic cylinder does not fall below a threshold value.

In accordance with the present invention, the supply branch comprises a connecting branch extending between the check valve and the hydraulic cylinder to the discharge branch and a shut-off valve to selectively connect the supply branch to the discharge branch.

In this way, it is possible to send to discharge at least the section of the branch mentioned in direct communication with the at least hydraulic cylinder and lock the multi disc brake.

In particular, the shut-off valve is a solenoid valve, which in the rest position puts the section of the supply branch directly upstream of the at least one hydraulic cylinder in communication with the discharge branch and in the energized position interrupts the connection between the supply branch and the discharge branch.

In this way, in the absence of power the hydraulic cylinder is connected to the discharge branch for the benefit of the safety of the vehicle.

In particular, the control unit is configured to control the shut-off valve according to the second signal correlated with instructions provided to the control unit. When the instructions require the multi disc brake to be released, the shut-off valve is energized to supply the at least one hydraulic cylinder. On the contrary, when the instructions provide for locking the multi disc brake, the shut-off valve is de-energized so as to open the communication between the supply branch directly upstream of the at least hydraulic cylinder and the return branch.

In particular, the supply branch comprises two connecting branches extending in parallel between the check valve and the at least one hydraulic cylinder and two second shut-off valves along the respective connecting branches to selectively connect the supply branch with at least one discharge branch; the control unit being configured to control the two shut-off valves simultaneously according to the second signal in order to remedy the malfunction of either two valves for the benefit of the safety of the vehicle.

In particular, the hydraulic circuit comprises a pressure-limiting valve downstream of the distribution valve and upstream of the check valve so as to supply the supply branch at the desired pressure.

In accordance with an embodiment of the present invention, the further consumer comprises two double-acting hydraulic cylinders, the circuit comprising two two-way and three-position solenoid valves to control the respective double-acting cylinders, in particular to selectively raise and lower the cabin of a groomer vehicle. It is a consumer that is active when the groomer vehicle is braked and therefore the pump can be completely dedicated to the further consumer.

In accordance with a further embodiment of the present invention, the circuit comprises an auxiliary branch to selectively supply the section of the supply branch directly upstream of the at least one cylinder by means of a hand-operated pump.

This solution allows the brake to be released even when the vehicle is not in operation.

A further aim of the present invention is to provide a control method for controlling a multi disc brake which is free from the drawbacks of the known art.

In accordance with the present invention, a method for controlling a multi disc brake is provided, the method comprising:
- supplying a pressurized fluid along a supply branch of a hydraulic circuit with a pump;
- supplying the pressurized fluid to at least one single-acting hydraulic cylinder of at least one multi disc brake by means of the pump and the supply branch and by means of a check valve arranged along the supply branch;
- selectively connecting the supply branch to the pump by means of a distribution valve; and
- controlling the pump and the distribution valve by means of a control unit.

In this way, it is possible to supply the hydraulic cylinder with the fluid at the desired pressure and maintain the pressure of the fluid in the cylinder without the need to supply the circuit with pressurized fluid.

The method provides for acquiring a first signal correlated with fluid pressure in the section of the supply branch arranged along the supply branch directly upstream of the at least one hydraulic cylinder; so that it can be checked whether the pressure is sufficient to keep the multi disc brake released.

In accordance with an embodiment of the present invention, the method provides for selectively supplying a further supply branch configured to operate a further consumer and controlling two double-acting hydraulic cylinders by means of two respective two-way and three position solenoid valves arranged along the further supply branch.

In accordance with a further embodiment of the present invention, the method provides for selectively supplying a section of the supply branch directly upstream of the at least one cylinder by means of an auxiliary branch and a hand-operated pump.

### BRIEF DESCRIPTION OF THE DRAWINGS

Further characteristics and advantages of the present invention will become clear from the following description of non-limiting examples of embodiment thereof, with reference to the figures of the attached drawings, in which:
Figures 1, 2 and 3 are schematic views, with parts removed for the sake of clarity, of a control device of a multi disc brake realized in accordance with a first embodiment of the present invention and in respective three operating steps; and
Figure 4 is a schematic view, with parts removed for the sake of clarity, of a control device of a multi disc brake made in accordance with a second embodiment of the present invention.

### PREFERRED EMBODIMENT OF THE INVENTION

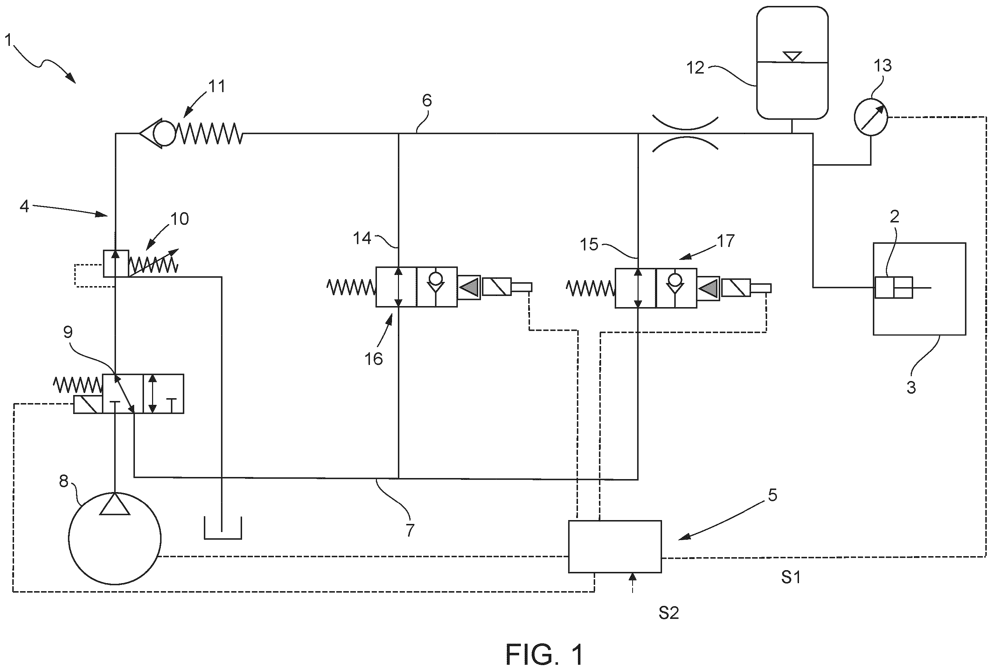

With reference to Figures 1 through 3 with reference number 1, a control device is identified for selectively supplying a hydraulic cylinder 2 of a multi disc brake 3 of a tracked vehicle not shown in the attached Figures.

The control device 1 comprises a hydraulic circuit 4, and a control unit 5 configured to control the hydraulic circuit 4.

The hydraulic circuit 4 comprises a supply branch 6, a discharge branch 7, a pump 8 selectively connectable to the supply branch 6 to supply pressurized fluid to the hydraulic cylinder 2.

In the case shown, the pump 8 is dedicated to serving a plurality of consumers, in addition to the function of releasing the brake. By way of example only, the additional consumers can be a disc, a cutter, a winch or hydraulic suspensions. For this reason the pump 8 is generally in operation and its flow rate can be commensurate with the requests of the consumers as, for example, described in document EP 2,507,436 B1 belonging to the Applicant.

A distribution solenoid valve 9, a pressure relief valve 10, a check valve 11, a compensation tank 12 and a pressure sensor 13 are arranged in succession along the supply branch 6.

The supply branch 6 is connected to the discharge branch 7 by means of two connecting branches 14 and 15, along which two shut-off solenoid valves 16 and 17 are arranged.

The control unit 5 is configured to control the pump 8, the distribution solenoid valve 9 and the shut-off solenoid valves 16 and 17 according to a signal S1 correlated to the pressure in the section of the supply branch 6 downstream of the check valve 11 and acquired by the pressure sensor 13 and a signal S2 correlated with instructions provided to the control unit 5. In fact, the instructions consist of locking or releasing the multi-disc brake 3.

In this case, the distribution solenoid valve 9 in the rest position connects the supply branch 6 to the discharge branch 7 and interrupts the connection with the pump 8, and in the operating position, i.e. energized, connects the pump 8 to the supply branch 6 and interrupts the connection between the supply branch 6 and the discharge branch 7.

The pressure relief valve 10 limits the pressure downstream of the pump 8 to a given pressure, for example 60 bar, and discharges the excess fluid. The purpose of the pressure relief valve 10 is to avoid excessive values for the hydraulic circuit 4 and to be able to share the pump 8 with other consumers that may require higher pressures than those provided for this hydraulic circuit 4.

The check valve 11 has the function of maintaining the given pressure in the section of the supply branch 6 that extends between the check valve 11 and the hydraulic cylinder 2.

The compensation tank 12 has the function of compensating for pressure fluctuations along the supply branch 6, in particular along the section extending between the check valve 11 and the hydraulic cylinder 2.

Each of the shut-off valves 16 and 17 in the rest position puts the supply branch 6 in communication with the discharge branch 7 and in the energized position interrupts the connection between the supply branch 6 and the discharge branch 7.

With reference to Figure 1, the distribution solenoid valve 9 isolates the pump 8 from the supply branch 6 and connects the supply branch with the discharge branch 7 while the shut-off solenoid valves 16 and 17 are both in the rest position so as to connect the section of the supply branch 6 downstream of the check valve 11 with the discharge branch 7.

The configuration of the hydraulic circuit 4 of Figure 1 corresponds to the situation where the signal S2 is correlated to the instruction of multi disc brake locked and vehicle braked.

The same configuration of the hydraulic circuit 4 takes place in the absence of power supply. In fact, in the absence of power, the pump 8 is inactive and the solenoid valves 9, 15 and 17 completely discharge the supply branch 6.

In the configuration of Figure 1 of the hydraulic circuit 4, the multi disc brake 3 is locked.

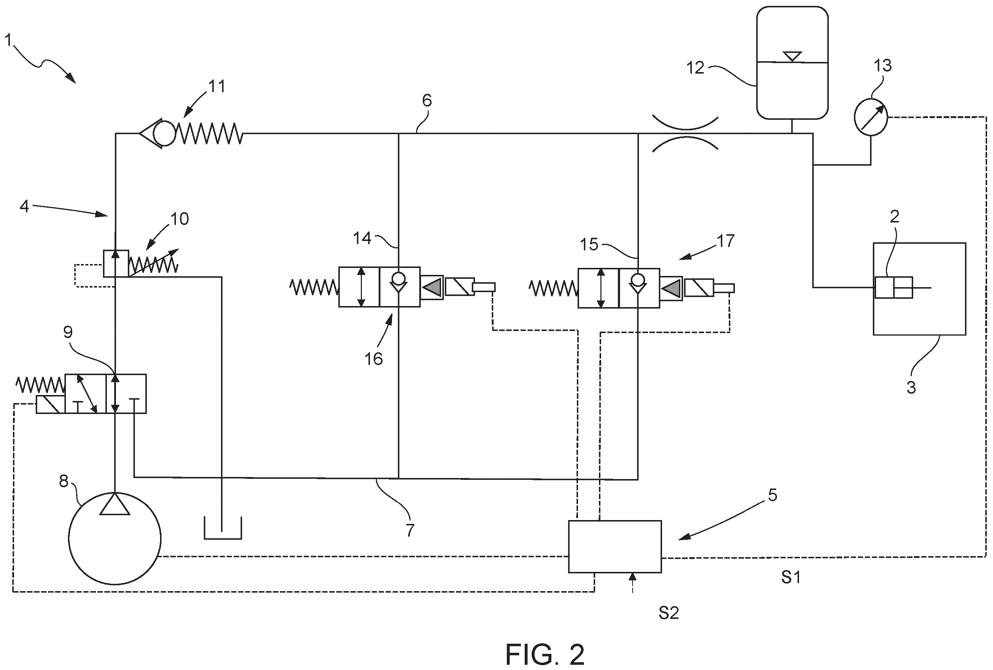

The configuration of Figure 2 of the hydraulic circuit corresponds to a condition in which the signal S2 is correlated to instructions to release or keep the multi disc brake 3 released and the signal S1 correlated to pressure is lower than a determined threshold value.

In this configuration, the control unit 5 activates the pump 8, connects the pump 8 to the supply branch, and isolates the supply branch 6 from the return branch 7 by means of the solenoid valves 9, 14 and 15.

This configuration is maintained until the signal S1 correlated to pressure is lower than the predetermined threshold value.

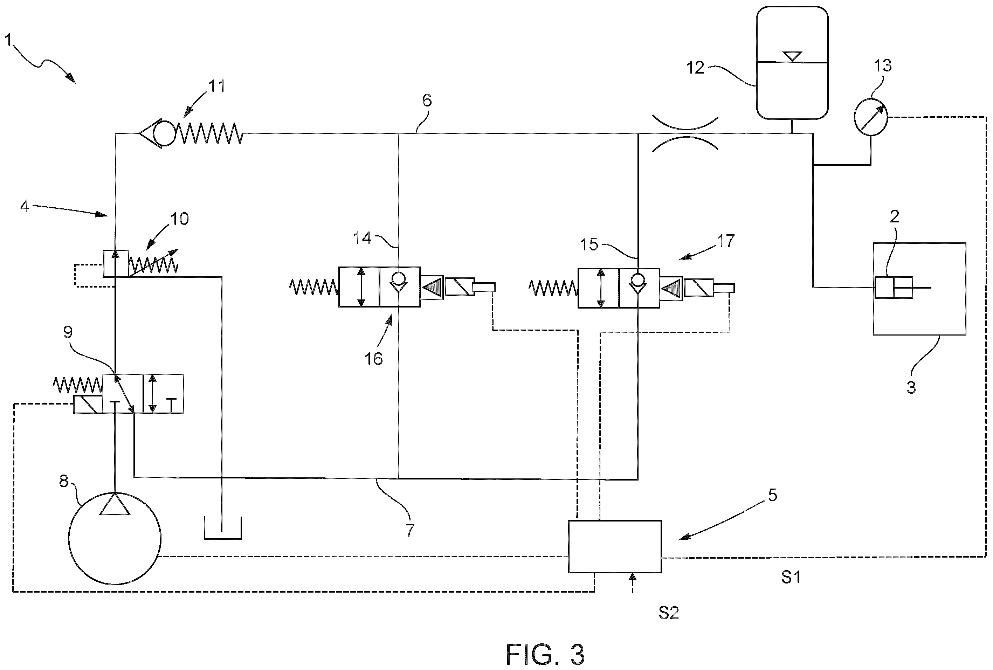

When the signal S1 correlated to pressure reaches the predetermined threshold value, the control unit 5 isolates the pump 8 from the supply branch 6 and connects the section of the supply branch 6 upstream of the check valve with the discharge branch 7 as shown in Figure 3.

In this configuration of the hydraulic circuit 4, the section of the supply branch 6 between the check valve 11 and the hydraulic cylinder 2 maintains the pressure reached by the pump 8 at the predetermined value.

If the pressure falls below the predetermined value, the control unit 5 activates the solenoid valve 9 in the configuration of Figure 2 to return the pressure to the predetermined value.

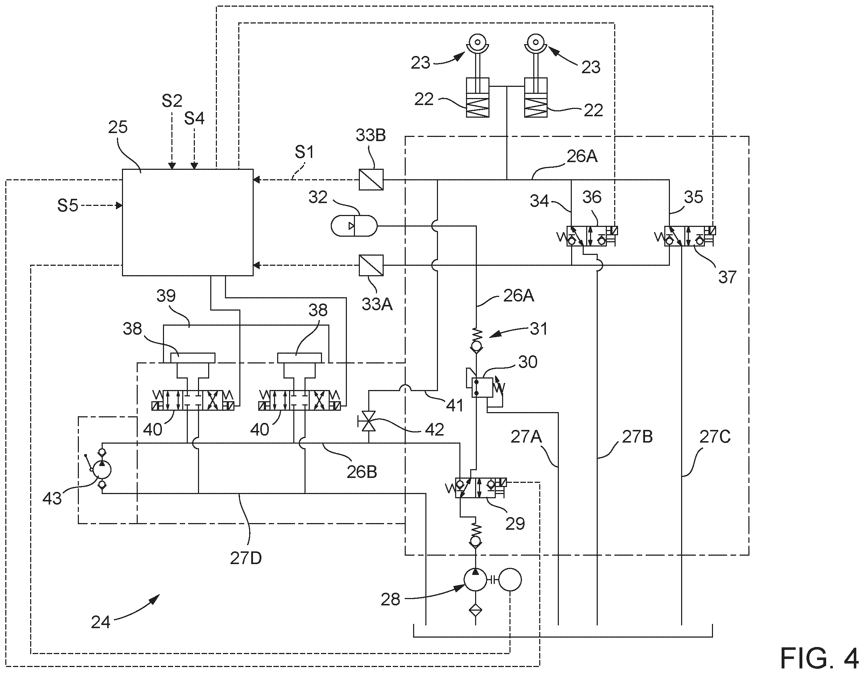

With reference to Figure 4, with reference number 21, a control device is identified for selectively supplying two hydraulic cylinders 22 of two respective multi disc brakes 23 and a further consumer of a tracked vehicle, in this case a groomer vehicle, not shown in the attached Figures.

The control device 21 comprises a hydraulic circuit 24, and a control unit 25 configured to control the hydraulic circuit 24.

The hydraulic circuit 24 comprises two supply branches 26A and 26B, and a plurality of discharge branches 27A, 27B, 27C and 27D, a pump 28 selectively connectable to the supply branches 26A and 26B to selectively supply pressurized fluid to the hydraulic cylinders 22 or to the other consumer.

The pump 28 is selectively connectable to the supply branch 26A or to the supply branch 26B by means of a distribution solenoid valve 29.

A pressure relief valve 30, a check valve 31, a compensation tank 32 and a pressure sensor 33A are arranged along the supply branch 26A in succession.

The supply branch 26A bifurcates into two connecting branches 34 and 35, along which two shut-off solenoid valves 36 and 37 are arranged, downstream of which the connecting branches 34 and 35 rejoin in the section of supply branch 26A directly connected to the hydraulic cylinders 22, along which a further pressure sensor 33B is arranged.

The branch 26B is configured to supply a further consumer which, in the case shown, is defined by two double-acting hydraulic cylinders 38 configured to selectively overturn and close a driving cabin 39 of a tracked vehicle not shown in the attached Figures.

The hydraulic cylinders 38 are controlled by respective normally closed two-way and three-position solenoid valves 40 supplied by the supply branch 26B and connected to the discharge branch 27D.

The supply branch 26B is connected to the section of the supply branch 26A directly connected to the hydraulic cylinders 22 by means of an auxiliary branch 41, along which a manually-controlled shut-off valve 42 is arranged.

A hand-operated pump 43 is arranged between the supply branch 26A and the return branch 27D.

The control unit 25 is configured to control the pump 28, the distribution solenoid valve 29 and the shut-off solenoid valves 36 and 37 according to a signal S1 correlated to the pressure in the section of the supply branch 26A acquired by the pressure sensor 33B downstream of the shut-off valves 36 and 37 and acquired by the pressure sensor 33B and a signal S2 correlated with instructions provided to the control unit 15 by an operator. In fact, the instructions consist of locking or releasing the multi-disc brake 23.

In this case, the distribution solenoid valve 29 in the rest position connects the pump to the supply branch 26A, and in the operating position, i.e. energized, connects the pump 8 to the supply branch 26B and interrupts the connection between the pump and the supply branch 26A.

The pressure relief valve 10 limits the pressure downstream of the pump 8 to a certain pressure and discharges the excess fluid.

The check valve 31 has the function of maintaining the given pressure in the section of the supply branch 26A that extends between the check valve 31 and the shut-off valves 36 and 37.

The compensation tank 32 has the function of compensating for pressure fluctuations along the supply branch 26A, in particular along the section extending between the check valve 31 and the shut-off valves 36 and 37. Unlike the configuration described in Figures 1 to 3, in the configuration of Figure 4, when the pressure detected by the pressure sensor 33A is sufficiently high, the tank 32 may be able to release the brakes 23 without activating the pump 28 because the shut-off valves 36 and 37 are able to discharge only the section of the supply branch 26A downstream thereof and keep the section of the supply branch 26A upstream of the shut-off valves 36 and 37 under pressure. In any case, the tank 32 is able to provide a boost for a rapid releasing of the brakes 23.

Each of the shut-off valves 36 and 37 in the rest position puts the section of the supply branch 26A directly connected to the hydraulic cylinders 22 in communication with respective discharge branches 27B and 27C and in the energized position provides continuity to the communication along the supply branch 26A to increase the pressure in the section of the branch 26A in direct communication with the hydraulic cylinders 22, in the event that the sensor 33B detects a lowering of the pressure in said section.

The control unit 25 is configured to receive a signal S4 of instructions for overturning the cabin 36 or S5 for closing the cabin 36. In this case, both cases, the control unit 25 operates the pump 28 and the solenoid valve 29 to supply the branch 26B and the solenoid valves 40 to supply the hydraulic cylinders 38 in one direction or in the opposite direction.

As in the case of the first embodiment, in the absence of supply the brakes 23 remain locked. However, by means of the manually operated pump 43 and the manually operated valve 42 it is possible to pressurize the section of the supply branch 26A directly connected to the hydraulic cylinders 22 to release the brakes 23.

It is evident that variants can be made to the present invention without, however, departing from the scope of protection of the appended claims.

## Claims

1. A control device of a multi disc brake, the control device (1; 21) comprising a hydraulic circuit (4; 24) comprising:
- a supply branch (6; 26A) for supplying a pressurized fluid to at least a single-acting hydraulic cylinder (2; 22) of a multi disc brake (3; 23);
- at least one discharge branch (7; 27A, 27B, 27c)) selectively connectable to the supply branch (6; 26A) to discharge the supply branch (6; 26A);
- a pump (8; 28) to supply pressurized fluid to the supply branch (6; 26A);
- a distribution valve (9; 29) to selectively connect the supply branch (6; 26A) to the pump (8; 28); and
- a check valve (11; 21)) arranged along the supply branch (6; 26A) downstream of the distribution valve (9; 29) to maintain a determined pressure in the hydraulic cylinder (2; 22);
- the control device (1; 21) comprising a control unit (5; 25) to control the pump (8; 28) and the distribution valve (9; 29).

2. The control device as claimed in claim 1, wherein said distribution valve (9) is a solenoid valve, which in the rest position connects the supply branch (6) to the discharge branch (7) and isolates the pump (8) from the supply branch (6), and in the operating position connects the pump (8) to the supply branch (6) and breaks the connection between the supply branch (6) and the discharge branch (7).

3. The control device as claimed in claim 1, wherein said distribution valve (29) is a solenoid valve, which in the rest position connects the pump (28) to the supply branch (26A), and in the operating position connects the pump (28) to a further supply branch (26B) configured to operate a further consumer and interrupts the connection between the pump (28) and the supply branch (26A).

4. The control device as claimed in any one of the preceding claims, wherein the hydraulic circuit (4) comprises a pressure sensor (13; 33B) disposed along the supply branch (6; 26A) directly upstream of the at least one hydraulic cylinder (2; 22) to acquire a first signal (S1) correlated with fluid pressure in the section of the supply branch (6; 26A) in direct communication with the at least one hydraulic cylinder (2; 22).

5. The control device as claimed in claim 4, wherein the control unit (5; 25)) is configured to control actuation of the pump (8; 28)) and the distribution valve (9; 29) according to said first signal (S1) and a second signal (S2) correlated with instructions provided to the control unit (5; 25).

6. The control device as claimed in any one of the preceding claims, wherein the hydraulic circuit (4; 24) comprises a compensation tank (12; 32) arranged along the section of the supply branch (6; 26A) comprised between the check valve (11; 31) and the at least hydraulic cylinder (2; 22) to stabilize the pressure along said section of the supply branch (6; 26A).

7. The control device as claimed in any one of the preceding claims, wherein the supply branch (26A) comprises a connecting branch (14; 34) extending between the check valve (11) and the at least one hydraulic cylinder (2; 22) and a shut-off valve (16) to selectively connect the supply branch (6; 26A) with the discharge branch (7; 27B) and wherein the shut-off valve (16; 36) is a solenoid valve, which in the rest position puts the section of the supply branch (6; 26A) directly upstream of the at least one hydraulic cylinder (2; 22) in communication with the discharge branch (7; 27B) and in the energized position interrupts the connection between the supply branch (6; 26A) and the discharge branch (7; 27B), and wherein the control unit (5; 25) controls the shut-off valve (16; 36) according to a second signal (S2) correlated with instructions provided to the control unit (5; 25).

8. The control device as claimed in claim 7, wherein the supply branch (6; 26A) comprises two connecting branches (14, 15) extending in parallel between the check valve (11) and the at least one hydraulic cylinder (2; 22) and two second shut-off valves (16, 17) along the respective connecting branches (14, 15) to selectively connect the supply branch (6; 26A) with at least one discharge branch (7; 27B; 27C); the control unit being configured to control the two shut-off valves (16, 17) simultaneously according to the second signal (S2)

9. The device as claimed in any one of claims 3 to 8, wherein the further consumer comprises two double-acting hydraulic cylinders (40), the circuit (24) comprising two two-way and three-position solenoid valves (40) to control the respective double-acting cylinders (40).

10. The device as claimed in any one of the preceding claims, wherein the circuit (24) comprises an auxiliary branch (41) to selectively supply a section of the supply branch (26A) directly upstream of the at least one cylinder (2; 22) by means of a hand-operated pump.

11. A control method for controlling a multi disc brake, the method comprising:
- supplying a pressurized fluid along a supply branch (6; 26A) of a hydraulic circuit (4; 24) with a pump (8; 28);
- supplying the pressurized fluid to at least one single-acting hydraulic cylinder (2; 22) of at least one multi disc brake (3; 23) by means of the pump (8; 28) and the supply branch (6; 26A) and through a check valve (11; 31) arranged along the supply branch (6; 26A);
- selectively connecting the supply branch (6; 26A) to the pump (8; 28) by means of a distribution valve (9; 29); and
- controlling the pump (8; 28) and the distribution valve (9; 29) by means of a control unit (5; 25).

12. The method as claimed in claim 11, and comprising the steps of:
- acquiring a first signal (S1) correlated with fluid pressure in the section of the supply branch (6; 26A) arranged along the supply branch (6; 26A) directly upstream of the at least hydraulic cylinder (2; 22)
- controlling the actuation of the pump (8) and the distribution valve (9) according to said first signal (S1) and a second signal (S2) correlated with instructions provided to the control unit (5).

13. The control method as claimed in claim 11 or 12 and comprising selectively connecting the section of the supply branch (6; 26A) directly upstream of the at least one hydraulic cylinder (2; 22) to the discharge branch (7; 27B) along a first and a second connecting branch (14; 15) according to said second signal (S2) correlated with instructions provided by the control unit (5; 25)

14. The method as claimed in any one of claims 11 to 13 and comprising selectively supplying a further supply branch (26B) configured to operate a further consumer and control two double-acting hydraulic cylinders (40) by means of two respective two-way and three-position solenoid valves (40) arranged along the further supply branch (26B).

15. The device as claimed in any one of claims 11 to 14 and selectively comprising supplying a section of the supply branch (26A) directly upstream of the at least one cylinder (2; 22) by means of an auxiliary branch (41) and a hand-operated pump.
